# EUROPÄISCHE PATENTANMELDUNG

(11) **EP 2 675 037 A1**
(43) Veröffentlichungstag der Anmeldung: **18.12.2013**
(21) Anmeldenummer: 12171653.4
(22) Anmeldetag: 12.06.2012
(51) Int. Cl.: H02J 9/02

(54) **Betriebssteuervorrichtung und Verfahren zur Steuerung des Betriebs einer Beleuchtungsanordnung mit Notbeleuchtung**

(71) Anmelder: Vossloh-Schwabe Deutschland GmbH, 73660 Urbach (DE)
(72) Erfinder: Braunschmid, Peter, 73430 Aalen (DE); Bulling, Martin, 73527 Schwäbisch Gmünd (DE); Hinrichs, Elmar, 73660 Urbach (DE); Müller, Florian, 73614 Schorndorf (DE)
(74) Vertreter: Rüger, Barthelt & Abel

(57) **Zusammenfassung**

Die Erfindung betrifft eine Betriebssteuervorrichtung (10) für eine Beleuchtungsanordnung (43, 45), die eine Notbeleuchtung (43) aufweist. Die Betriebssteuervorrichtung weist einen Speicherkondensator (36) zur Versorgung der Notbeleuchtung (43) auf, wenn eine im Normalbetrieb verfügbare Netzspannung (UN) ausfällt. Über eine Ladeschaltung (35) wird der Speicherkondensator (36) bei verfügbarer Netzspannung (UN) geladen. Die Ladeschaltung (35) weist einen ersten Wandler (20) mit galvanischer Trennung auf, der vorzugsweise als Sperrwandler ausgeführt ist. Die Ladeschaltung (35) wird von einer Steuereinheit (25) angesteuert. Die Steuereinheit (25) bestimmt den Ladezustand des Speicherkondensators (36) und steuert abhängig davon die Ladeschaltung (35) an. Zwischen dem Speicherkondensator (36) und der Notbeleuchtung (43) ist ein zweiter Wandler (42), vorzugsweise ein Sperrwandler, angeordnet. Unabhängig von der am Speicherkondensator (36) verfügbaren Kondensatorspannung (UC) kann die erforderliche elektrische Leistung über den zweiten Wandler (42) an der Notbeleuchtung (43) bereitgestellt werden.

## Beschreibung

Die Erfindung betrifft eine Betriebssteuervorrichtung für eine Beleuchtungsanordnung mit einer Notbeleuchtung und ein Verfahren zu deren Steuerung.

Bei Beleuchtungsanordnungen besteht in bestimmten Fällen die Notwendigkeit, dass eine Notbeleuchtungsfunktion bei Netzspannungsausfall gewährleistet ist, beispielsweise bei der Beleuchtung von Notausgängen, in Tunnels oder ähnlichem. Betriebssteuervorrichtungen für solche Beleuchtungsanordnungen weisen daher in der Regel eine Batterie oder einen Akkumulator auf. Bei der Verwendung von Akkumulatoren kann die Betriebssteuervorrichtung eine Ladeschaltung aufweisen, die den Akkumulator bei verfügbarer Netzspannung auflädt. Dies hat den Vorteil, dass nach der teilweisen Entladung des Akkumulators während einer Notbetriebsphase, in der die Netzspannung ausgefallen war, dieser wieder aufgeladen wird und nicht ausgetauscht werden muss.

Der Wartungsaufwand für solche Betriebssteuervorrichtungen ist hoch. Akkumulatoren zum Betrieb der Notbeleuchtung müssen alle zwei bis drei Jahre ausgewechselt werden, was hohe Kosten verursacht. Außerdem ist es dabei erforderlich, den Akkumulator möglichst einfach zugänglich zu machen und Gefahren durch Stromschläge für das Personal beim Akkumulatortausch auszuschließen.

Aus WO 2005/060067 ist es bekannt, anstelle eines Akkumulators zur Energieversorgung für eine Notbeleuchtung einen Elektrolyt-Kondensator (Ultra-cap) zu verwenden. Dadurch kann der Wartungsaufwand reduziert werden.

Ausgehend hiervon kann es eine Aufgabe der vorliegenden Erfindung sein, die Betriebssteuervorrichtung bzw. das Verfahren zu deren Betrieb weiter zu verbessern.

Erfindungsgemäß wird eine Betriebssteuervorrichtung für eine Beleuchtungsanordnung mit einer Beleuchtungseinheit und einer Notbeleuchtung vorgeschlagen. Die Beleuchtungsanordnung für den Normalbetrieb bei verfügbarer Netzspannung und die Notbeleuchtung können durch unterschiedliche Leuchtmittel gebildet sein. Bei den Leuchtmitteln für die Beleuchtungsanordnung und/oder die Notbeleuchtung handelt es sich vorzugsweise um Halbleiterleuchtmittel, insbesondere Leuchtdioden. Alternativ kann sowohl die Notbeleuchtung, als auch die Beleuchtungseinheit dieselben Leuchtmittel verwenden.

Im Normalbetrieb wird die Beleuchtungseinheit über die Betriebssteuervorrichtung gesteuert. Wenn die Netzspannung ausfällt, wird die Notbeleuchtung betrieben. Zur Versorgung der Notbeleuchtung mit elektrischer Energie ist wenigstens ein Kondensator und vorzugsweise wenigstens ein Feststoffkondensator vorhanden. Bei einem besonders bevorzugten Ausführungsbeispiel ist der Feststoffkondensator durch einen Lithium-Ionen-Kondensator (LIC) gebildet. Der Feststoffkondensator hat den Vorteil, dass er im Vergleich zu Akkumulatoren wartungsfrei ist und im Gegensatz zu Elektrolytkondensatoren kein Elektrolyt als lebensdauerbegrenzendes Dielektrikum benötigt. Außerdem weist er eine hohe Energiedichte auf. Über eine Ladeschaltung, die über einen ersten Wandler galvanisch von der Netzspannung getrennt ist, kann der wenigstens eine Kondensator aufgeladen werden. Eine Steuereinheit dient zur Ansteuerung der Ladeschaltung abhängig vom Ladezustand des wenigstens einen Kondensators.

Abhängig vom Ladezustand des wenigstens einen Kondensators ändert sich dessen Kondensatorspannung. Bei Ausfall der Netzspannung muss im Notbetrieb sichergestellt werden, dass die Notbeleuchtung während der Entladung des wenigstens einen Kondensators im Notbetriebszustand weitgehend unabhängig von der Ladung und mithin der Kondensatorspannung betrieben werden kann. Zu diesem Zweck ist zwischen dem wenigstens einen Kondensator und der Notbeleuchtung ein zweiter Wandler zwischengeschaltet, der vorzugsweise als Sperrwandler ausgeführt ist, jedoch auch als Durchfluss- oder Resonanzwandler ausgeführt sein kann. Über diesen zweiten Wandler wird zum einen sichergestellt, dass die an die Notbeleuchtung angelegte Spannung nicht zu groß ist und die Leuchtmittel der Notbeleuchtung nicht beschädigt. Zum anderen wird der zum Betrieb der Notbeleuchtung benötigte Strom bzw. bei vorgegebener Spannung an der Notbeleuchtung die Leistung eingestellt. Der zweite Wandler sorgt dafür, dass ausgangsseitig die für den Betrieb der Notbeleuchtung notwendige Spannung bzw. der für den Betrieb notwendige Strom bereitgestellt wird, unabhängig davon, welche Spannung eingangsseitig am zweiten Wandler durch den wenigstens einen Kondensator zur Verfügung gestellt wird. Der zweite Wandler kann einen gesteuerten Schalter aufweisen, der durch die Steuereinheit angesteuert wird. Die Steuereinheit kennt die aktuelle Kondensatorspannung und kann die Ansteuerung des gesteuerten Schalters des zweiten Wandlers zur Einstellung der Spannung und/oder des Stroms am Ausgang des zweiten Wandlers für die Notbeleuchtung einstellen. Dabei verändert die Steuereinheit vorzugsweise das Tastverhältnis des Schalters, um die absinkende Kondensatorspannung zu kompensieren. Es ist jedoch auch denkbar, dass die Schaltfrequenz verändert wird.

Der wenigstens eine Kondensator ist wartungsfrei und muss nicht regelmäßig ersetzt werden. Daher ist auch dessen Zugänglichkeit in der Betriebssteuervorrichtung nicht von Bedeutung. Ein Berührschutz am Kondensator zum Schutz des Wartungspersonals ist wegen der Wartungsfreiheit ebenfalls nicht erforderlich. Wenn mehrere Kondensatoren zur Bereitstellung von elektrischer Energie für die Notbeleuchtung verwendet werden, können diese in Reihe und/oder parallel zueinander geschaltet sein und eine Kondensatoranordnung bilden. Die Kondensatorspannung ist dann die Spannung, die an der Kondensatoranordnung anliegt.

Vorzugsweise ist eine Spannungsüberwachungsschaltung zur Überwachung der Netzspannung vorhanden. Die Spannungsüberwachungsschaltung kann ein die Verfügbarkeit der Netzspannung angebendes Überwachungssignal an die Steuereinheit übermitteln.

Die Steuereinheit kann galvanisch von der Netzspannung getrennt sein. In diesem Fall kann auch die Spannungsüberwachungsschaltung ein Mittel zur galvanischen Trennung, beispielsweise einen Optokoppler aufweisen. Das Überwachungssignal ist dann galvanisch von der Netzspannung entkoppelt. Das Anordnen der Steuereinheit auf der Sekundärseite der Betriebssteuervorrichtung hat den Vorteil, dass die Steuereinheit problemlos bei ausgefallener Netzspannung durch die Energie des Kondensators verlustarm betrieben werden kann.

Die Steuereinheit ist dazu eingerichtet, bei verfügbarer Netzspannung Mittel zum Betreiben der Beleuchtungseinheit anzusteuern und bei fehlender Netzspannung Mittel zum Betreiben der Notbeleuchtung zu steuern. Die Steuereinheit muss somit sowohl im Normalbetrieb, als auch im Notbetrieb verfügbar sein.

Die Steuereinheit ist zur Versorgung mit elektrischer Energie bei einem Ausführungsbeispiel an den ersten Wandler der Ladeschaltung angeschlossen. Beispielsweise kann der erste Wandler durch einen Sperrwandler, einen Durchflusswandler, einen Resonanzwandler oder einen geeigneten anderen Wandler gebildet sein. Der erste Wandler kann mehrere Sekundärwicklungen oder Wicklungsabgriffe aufweisen und zum einen die Ladeschaltung und zum anderen die Steuereinheit mit elektrischer Energie versorgen. Dadurch wird eine kompakte Bauweise erreicht.

Vorteilhafterweise wird der erste Wandler bei dieser Ausführungsform derart durch die Steuereinheit angesteuert, dass die die Steuereinheit mit elektrischer Energie versorgende Sekundärwicklungsschaltung des ersten Wandlers eine konstante Versorgungsspannung für die Steuereinheit zur Verfügung stellt. Der sekundärseitige Lastzustand des ersten Wandlers ändert sich abhängig davon, ob die Ladeschaltung den Kondensator auflädt oder nicht. Die Steuereinrichtung stellt durch die Ansteuerung des ersten Wandlers sicher, dass diese sekundärseitigen Lastschwankungen nicht zu einer Beeinträchtigung der Versorgungsspannung der Steuereinheit dienen, sondern dass der Wandler stets derart angesteuert wird, dass eine konstante Versorgungsspannung anliegt. Die Versorgungsspannung für die Steuereinheit wird somit als Regel- bzw. Steuergröße bei der Steuerung des ersten Wandlers verwendet.

Bei einer Ausführungsform kann auch elektrische Energie für die Beleuchtungseinheit bei anliegender Versorgungsspannung vom ersten Wandler zur Verfügung gestellt werden. Alternativ hierzu besteht auch die Möglichkeit einen weiteren, dritten Wandler vorzusehen, über den die Beleuchtungseinheit und/oder die Steuereinheit an die Netzspannung angeschlossen sind.

Bei einer bevorzugten Ausführungsform stellt die Ladeschaltung einen konstanten Ladestrom für den wenigstens einen Kondensator zur Verfügung. Durch die Verwendung des Kondensators, insbesondere eines Feststoffkondensators, kann die Ladeschaltung sehr einfach ausgestaltet werden. Komplexe Ladestromverläufe sind nicht notwendig.

Zur Versorgung der Steuereinheit bei Ausfall der Netzspannung kann diese über den zweiten Wandler mit dem wenigstens einen Kondensator verbunden sein. Der zweite Wandler stellt dadurch elektrische Energie für die Notbeleuchtung und für die Steuereinheit zur Versorgung. Alternativ zu dieser Ausgestaltung besteht auch die Möglichkeit, die Steuereinheit über einen separaten Wandler, vorzugsweise einen Hochsetzsteller mit dem wenigstens einen Kondensator zu verbinden. Der Hochsetzsteller dient dazu, die Steuereinheit bei Ausfall der Netzspannung mit elektrischer Energie aus dem Kondensator zu versorgen. Der separate Wandler kann unabhängig vom zweiten Wandler angesteuert werden und ist daher unabhängig vom Lastzustand an der Notbeleuchtung steuerbar.

Der Ladezustand des wenigstens einen Kondensators wird insbesondere durch die Messung der Kondensatorspannung erfasst und der Steuereinheit übermittelt. Beispielsweise kann die Ladeschaltung zum Aufladen des Kondensators einen Ladestrom liefern, wenn die Kondensatorspannung einen Minimalwert unterschreitet. Es ist auch möglich, den Notbetrieb zu beenden, bevor der wenigstens eine Kondensator vollständig entladen ist. Bei der Verwendung eines Feststoffkondensators würde dessen vollständige Entladung zu einer Beschädigung führen. Die Steuereinheit ist vorzugsweise derart eingerichtet, dass sie ein vollständiges Entladen durch eine entsprechende Ansteuerung des zweiten Wandlers verhindert. Dabei ist es auch möglich, die Leistung der Notbeleuchtung ab einem Spannungsschwellenwert der Kondensatorspannung insbesondere stufenweise zu reduzieren. Dadurch wird vermieden, dass die Notbeleuchtung plötzlich ausgeht, und außerdem kann die maximale Leuchtdauer der Notbeleuchtung verlängert werden. Gleichzeitig wird eine Beschädigung des Kondensators vermieden. Für die Messung der Leistung kann der zweite Wandler über eine Vorrichtung zur Strom- und Spannungsmessung verfügen. Bei einem Ausführungsbeispiel wird eine Konstantspannung an das Leuchtmittel angelegt, jedoch kann der zweite Wandler auch auf einen konstanten Strom und eine konstante Leistung regeln.

Während der Messung der Kondensatorspannung kann ein Aufladevorgang durch die Steuereinheit kurzzeitig unterbrochen werden. Bei fließendem Ladestrom wird die Spannungsmessung wegen des parasitären Serienwiderstands des Kondensators verfälscht. Wird der Ladestrom während der Spannungsmessung kurzzeitig unterbrochen, kann eine genauere Spannungsmessung erreicht werden. Alternativ hierzu besteht auch die Möglichkeit, die Spannungsmessung auch während des Aufladens des Kondensators ohne Unterbrechung des Ladestroms durchzuführen. Die Steuereinheit ist dann dazu eingerichtet, aus dem Spannungsmesswert einen korrigierten Wert der Kondensatorspannung zu ermitteln. Dies ist möglich, weil der parasitäre Serienwiderstand des wenigstens einen Kondensators ermittelt und eine entsprechende Rechenvorschrift in der Steuereinheit für eine Korrekturrechnung hinterlegt werden kann.

Die Betriebssteuervorrichtung kann als Gerät mit einem Gerätegehäuse ausgestaltet sein. Der Speicherkondensator und die Ladeschaltung und optional auch die Steuereinheit und/oder der zweite Wandler sind in dem Gerätegehäuse untergebracht. Somit kann eine zusätzliche Sicherheitsisolation zwischen dem Speicherkondensator und der übrigen Schaltung entfallen. Ein Berührungsschutz ist nicht erforderlich.

Vorteilhafte Ausgestaltungen der Betriebssteuervorrichtung und eines zu deren Betrieb verwendeten Verfahrens ergeben sich aus den abhängigen Patentansprüchen sowie der Beschreibung. Die Beschreibung beschränkt sich auf wesentliche Merkmale der Erfindung. Die Zeichnung ist ergänzend heranzuziehen. Nachfolgend werden bevorzugte Ausführungsbeispiele der Erfindung anhand der beigefügten Zeichnung erläutert. Es zeigen:

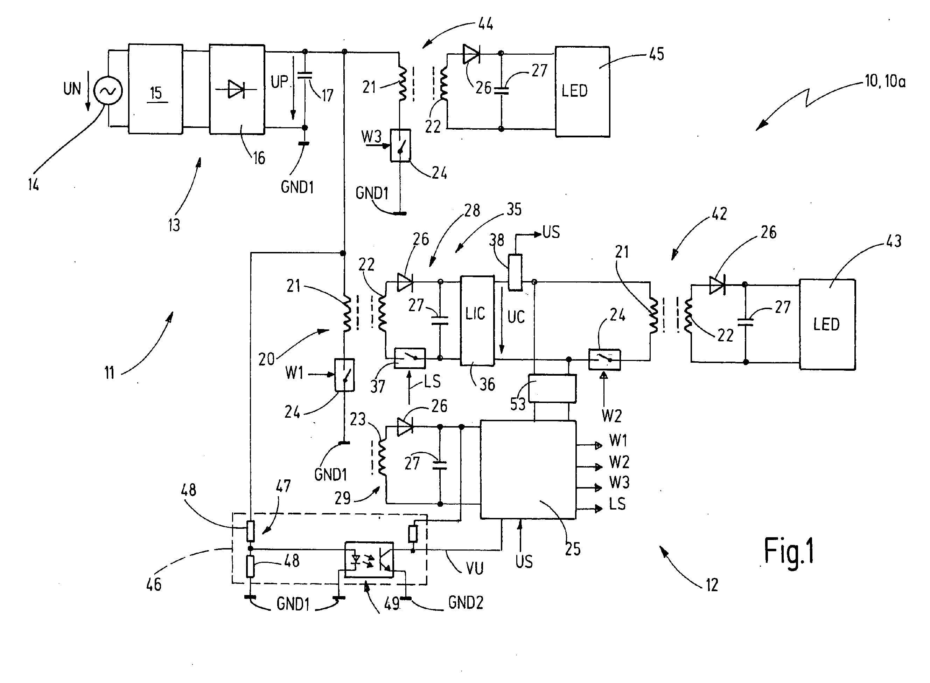

Figuren 1 bis 5 jeweils ein Blockschaltbild eines Ausführungsbeispiels einer Betriebssteuervorrichtung gemäß der vorliegenden Erfindung.

In der Zeichnung sind verschiedene Ausführungsbeispiele 10a bis 10e einer erfindungsgemäßen Betriebssteuervorrichtung 10 veranschaulicht. Figur 1 zeigt ein erstes Ausführungsbeispiel 10a im Blockschaltbild. Die erste Betriebssteuervorrichtung 10a weist eine Primärseite 11 und eine Sekundärseite 12 auf, die durchgängig galvanisch voneinander getrennt sind. Auf der Primärseite 11 weist die erste Betriebssteuervorrichtung 10 eine Gleichrichterschaltung 13 auf, die eingangsseitig an eine Netzspannungsquelle 14 anschließbar ist. Die Netzspannungsquelle 14 stellt eine Netzspannung UN bereit. Die Gleichrichterschaltung 13 umfasst beispielsgemäß einen Filter 15, sowie eine Diodenschaltung 16 mit vorzugsweise vier Dioden zur Gleichrichtung der Netzspannung UN. Ausgangsseitig stellt die Diodenspannung eine Primärspannung UP bereit, die an einem Glättungskondensator 17 der Gleichrichterschaltung 13 anliegt.

Die Primärgleichspannung UP ist an einen ersten Wandler 20 angelegt. Der erste Wandler 20 ist beispielsgemäß als Sperrwandler ausgeführt und weist eine Primärwicklung 21 und wenigstens eine Sekundärwicklung auf. Beim ersten Ausführungsbeispiel 10a der Betriebssteuervorrichtung 10 weist der erste Wandler 20 eine erste Sekundärwicklung 22 und eine zweite Sekundärwicklung 23 auf. In Reihe zur Primärwicklung 21 ist ein gesteuerter Wandlerschalter 24 geschaltet und mit der Masse GND1 der Primärseite 11 verbunden. Der gesteuerte Wandlerschalter 24 wird über ein erstes Wandlersignal W1 einer Steuereinheit 25 angesteuert. Die Steuereinheit 25 ist beispielsgemäß auf der Sekundärseite 12 angeordnet. Das erste Wandlersignal W1 wird deswegen beim Ausführungsbeispiel über ein nicht veranschaulichtes Mittel zur galvanischen Trennung - z.B. einen Optokoppler - von der Steuereinheit 25 zum primärseitigen Wandlerschalter 24 übertragen. Die Steuereinheit 25 weist beispielsgemäß einen Mikrocontroller zur Durchführung der Steueraufgaben auf. Der Wandlerschalter 24 des Wandlers 20 kann auch je nach Ausführung in einem vorzugsweise integrierten Schaltkreis untergebracht sein. Dieser Schaltkreis kann in einer solchen Anwendung unabhängig von der Steuereinheit 25 den Ladestrom in den wenigstens einen Speicherkondensator auf einen konstanten Ladestromsollwert oder auf eine Versorgungsspannung für die Steuereinheit 25 regeln.

In Reihe zu der ersten Sekundärwicklung 22 ist eine Wandlerdiode 26 und ein Wandlerkondensator 27 geschaltet, die zu einer ersten Sekundärwicklungsschaltung 28 des ersten Wandlers 20 gehören. Entsprechend weist eine zweite Sekundärwicklungsschaltung 29 eine Reihenschaltung aus der zweiten Sekundärwicklung 23, einer Wandlerdiode 26 und einem Wandlerkondensator 27 auf.

Die verwendeten Wandler sind bei den beschriebenen Ausführungsformen 10a bis 10e der Betriebssteuervorrichtung 10 als Sperrwandler ausgeführt, die im Wesentlichen denselben Aufbau haben. Jeder Sperrwandler weist eine Primärwicklung 21, einen in Reihe zur Primärwicklung geschalteten Wandlerschalter 24 und wenigstens eine Sekundärwicklungsschaltung 28, 29 auf. Jede Sekundärwicklungsschaltung 28, 29 weist eine Reihenschaltung aus einer Sekundärwicklung 22, 23, einer Wandlerdiode 26 und einem Wandlerkondensator 27 auf. Die Kathode der Wandlerdiode 26 ist mit dem Wandlerkondensator und die Anode mit der Sekundärwicklung 22, 23 verbunden. Alternativ hierzu könnten auch andere geeignete Wandler, wie Eintakt- oder Gegentaktflusswandler verwendet werden. Vorzugsweise werden Wandler verwendet, die eine galvanische Trennung beinhalten.

Die erste Sekundärwicklungsschaltung 28 ist Bestandteil einer Ladeschaltung 35 für wenigstens einen Speicherkondensator 36, der auf der Sekundärseite 12 der ersten Betriebssteuervorrichtung 10a angeordnet ist. Die Ladeschaltung 35 dient zum gesteuerten Aufladen des wenigstens einen Speicherkondensators 36. Die Steuerung des Ladevorgangs erfolgt durch die Steuereinheit 25. Hierfür weist die Ladeschaltung 35 einen gesteuerten Ladeschalter 37 auf, der über ein Ladesignal LS der Steuereinheit 25 angesteuert wird. Der Ladeschalter 37 ist beispielsgemäß in Reihe in die erste Sekundärwicklungsschaltung 28 eingesetzt, wobei er beim Ausführungsbeispiel gemäß Figur 1 zwischen dem Wandlerkondensator 27 und der ersten Sekundärwicklung 22 angeordnet ist. Der Ladeschalter 37 kann an einer beliebigen Stelle in der Sekundärwicklungsschaltung 28 angeordnet sein, beispielsweise auch in Reihe mit der Wandlerdiode 26 zwischen dieser und dem Wandlerkondensator 27. Der Ladeschalter 37, kann als Bipolartransistor, Feldeffekttransistor, IGBT, Relais oder Ähnliches ausgeführt sein. Bei der Anordnung nach der Wandlerdiode 26 kann dabei auch eine Treiber-Schaltung, die auch als integrierter Schaltkreis ausgeführt sein kann, zum Einsatz kommen, die den Schalter unabhängig von der Kondensatorspannung UC komplett durchsteuert. Wenn der Ladeschalter 37 in der Beschreibung erwähnt wird, ist auch ausdrücklich die Möglichkeit einer derartigen Ausbildung mit Treiber-Schaltung gemeint.

Der wenigstens eine Speicherkondensator 36 ist bei den hier beschriebenen Ausführungsformen als Feststoffkondensator und insbesondere als Lithium-Ionen-Kondensator LIC ausgeführt. Es können auch mehrere gleichartiger Speicherkondensatoren in Reihe und/oder parallel zu einer Speicherkondensator-Anordnung geschaltet sein, wobei nachfolgend vereinfacht von einem Speicherkondensator 36 gesprochen wird. Der Speicherkondensator 36 ist parallel zum Ausgang der ersten Sekundärwicklungsschaltung 28 und mithin parallel zum Wandlerkondensator 27 angeordnet. Durch Öffnen und Schließen des Ladeschalters 37 der Ladeschaltung 35 kann ein Aufladen des Speicherkondensators 36 mit einem Ladestrom ermöglicht bzw. der Ladestrom abgeschaltet werden.

Die Steuereinheit 25 steuert den Ladeschalter 37 abhängig vom Ladezustand des Speicherkondensators 36 an. Hierfür wird die Kondensatorspannung UC am Speicherkondensator 36 über eine Messschaltung 38 erfasst, die ein der gemessenen Kondensatorspannung UC entsprechendes Spannungssignal US erzeugt und an die Steuereinheit 25 übermittelt. Als Messschaltung 38 kann beispielsweise ein Spannungsteiler dienen.

Der Speicherkondensator 36 ist ausgangsseitig über einen zweiten Wandler 42 mit einer Notbeleuchtung 43 verbunden. Die Notbeleuchtung 43 weist ein oder mehrere Leuchtmittel, vorzugsweise Leuchtdioden auf. Der zweite Wandler 42 ist beim Ausführungsbeispiel ebenfalls als Sperrwandler ausgeführt, kann aber auch in einer anderen passenden Topologie ausgeführt sein. Dabei muss in dieser Anwendung nicht notwendigerweise eine galvanische Trennung erreicht werden. Er weist eine Reihenschaltung aus Primärwicklung 21 und einem gesteuerten Wandlerschalter 24 auf, die mit dem Ausgang des Speicherkondensators 36 verbunden ist. Der Wandlerschalter 24 des zweiten Wandlers 42 wird durch ein zweites Wandlersignal W2 von der Steuereinheit 25 angesteuert. Sekundärseitig weist der zweite Wandler 42 eine Sekundärwicklungsschaltung aus einer Sekundärwicklung 22, einer Wandlerdiode 26 und einem Wandlerkondensator 27 auf. Parallel zum Wanderkondensator 27 ist die Notbeleuchtung 43 geschaltet. Die Notbeleuchtung 43 ist mithin galvanisch vom Speicherkondensator 36 und der Ladeschaltung 35 getrennt, wenn der zweite Wandler als Sperrwandler ausgeführt ist.

Bei der ersten Betriebssteuervorrichtung 10a ist außerdem ein dritter Wandler 44 vorhanden, dessen Primärwicklung 21 an der Primärgleichspannung UP anliegt. Der dritte Wandler 44 ist sozusagen parallel zum ersten Wandler 20 an den Ausgang der Gleichrichterschaltung 13 angeschlossen. Auch der dritte Wandler 44 ist beispielsgemäß als Sperrwandler ausgestaltet. In Reihe zur Primärwicklung 21 ist der gesteuerte Wandlerschalter 24 des dritten Wandlers 44 geschaltet, der über ein drittes Wandlersignal W3 von der Steuereinheit 25 angesteuert wird. Auch das dritte Wandlersignal kann durch einen Optokoppler oder ein anderes galvanisches Trennmittel von der Sekundärseite 12 zur Primärseite 11 übertragen werden. In einer anderen Ausführung kann der Wandlerschalter 24 des Wandlers 44 in einem integrierten Schaltkreis untergebracht sein, wie der Wandlerschalter 24 des Wandlers 20. In dieser Ausführung würde dieser integrierte Schaltkreis über geeignete Maßnahmen, beispielsweise einen Optokoppler, der auf das Rückkopplungssignal Einfluss nimmt, so beeinflusst, dass er ein- und ausschaltbar ist.

Die Sekundärwicklungsschaltung des dritten Wandlers 44 ist durch eine Reihenschaltung aus einer Sekundärwicklung 22, einer Wandlerdiode 26 und einem Wandlerkondensator 27 gebildet. Parallel zum Wandlerkondensator 27 ist eine Beleuchtungseinheit 45 an den dritten Wandler 44 angeschlossen. Die Beleuchtungseinheit 45 weist ein oder mehrere Leuchtmittel für den Betrieb der Beleuchtung bei verfügbarer Netzspannung UN auf. Als Leuchtmittel können beispielsweise Leuchtdioden dienen.

Die Beleuchtungsanordnung ist beispielsgemäß durch die Beleuchtungseinheit 45 und die Notbeleuchtung 43 gebildet. Alternativ zum Ausführungsbeispiel könnten als Notbeleuchtung 43 und als Beleuchtungseinheit 45 auch dieselben Leuchtmittel verwendet werden.

Die erste Betriebssteuervorrichtung 10a verfügt außerdem über eine Spannungsüberwachungsschaltung 46. Die Spannungsüberwachungsschaltung 46 prüft das Vorliegen der Netzspannung UN und beispielsgemäß der bei vorliegender Netzspannung UN erzeugten Primärgleichspannung UP. Die Spannungsüberwachungsschaltung 46 ist dafür in diesem Beispiel mit dem Ausgang der Gleichrichterschaltung 13 verbunden, kann allerdings auch direkt mit Eingangswechselspannung 14 verbunden sein. Beispielsweise weist die Spannungsüberwachungsschaltung 46 einen Spannungsteiler 47 aus einer Reihenschaltung mehrere Ohmscher Widerstände 48 auf, die zwischen der Masse GND1 der Primärseite 11 und im Ausgang der Gleichrichterschaltung 13 angeordnet ist. Die an einen Mittenabgriff des Spannungsteilers 47 anliegende Spannung wird über ein galvanisches Trennmittel, beispielsweise einen Optokoppler 49 auf die Sekundärseite 12 der ersten Betriebssteuervorrichtung 10 übermittelt. Das durch den Optokoppler 49 an der Sekundärseite 12 zur Verfügung gestellte Überwachungssignal VU wird an die Steuereinheit 25 übermittelt. Der Optokoppler 49 ist auf der Sekundärseite 12 zur galvanischen Trennung mit einer Masse GND2 der Sekundärseite 12 verbunden, um eine vollständige galvanische Trennung gegenüber der Primärseite 11 zu gewährleisten. Bei verfügbarer Netzspannung UN steht auch eine Primärgleichspannung UP zur Verfügung. Das Überwachungssignal VU am Ausgang des Optokopplers 49 ist dann mit der Masse GND2 der Sekundärseite 12 verbunden und beträgt etwa gleich null Volt. Fällt die Netzspannung UN hingegen aus, weist das Überwachungssignal VU eine steigende Flanke auf, so dass ein Zusammenbruch der Netzspannung UN sehr schnell erkannt wird. In einem weiteren Ausführungsbeispiel kann die Spannungsüberwachungsschaltung 46 so ausgeführt sein, dass die Fotodiode des Optokopplers 49 jeweils nur beim Netzspannungsmaximum leitend wird. Dadurch würde auch das Überwachungssignal VU nicht dauerhaft mit der Masse GND2 verbunden. Man könnte in diesem Fall das kontinuierlich wiederkehrende Absinken des Überwachungssignals VU detektieren.

Um den Betrieb der Steuereinheit 25 auch bei Ausfall der Netzspannung UN zu gewährleisten, ist die Steuereinheit 25 über einen Gleichspannungswandler 53 an den Speicherkondensator 36 angeschlossen. Aus der Kondensatorspannung UC des Speicherkondensators 36 wird über den Gleichspannungswandler 53 bei Ausfall der Netzspannung UN die Versorgungsspannung für die Steuereinheit 25 erzeugt. Der Gleichspannungswandler 53 ist vorzugsweise von einem Hochsetzsteller gebildet.

Die erste Betriebssteuervorrichtung 10a arbeitet wie folgt:
Bei verfügbarer Netzspannung UN wird primärseitig eine Primärgleichspannung UP bereitgestellt. Die Primärgleichspannung UP wird über den ersten Wandler 21 zur Erzeugung einer Versorgungsspannung für die Steuereinheit 25 und zur Versorgung der Ladeschaltung 35mit elektrischer Energie verwendet. Die Steuereinheit 25 steuert den gesteuerten Wandlerschalter 24 über das erste Wandlersignal W1 dabei derart an, dass eine konstante Versorgungsspannung durch die zweite Sekundärwicklungsschaltung 29 an der Steuereinheit 25 anliegt. Abhängig von der durch die Messschaltung 28 gemessenen Kondensatorspannung UC wird über das Ladesignal LS der Ladeschalter 37 durch die Steuereinheit 25 angesteuert. Sinkt die Kondensatorspannung UC bei verfügbarer Netzspannung UN - was die Steuereinrichtung 25 über das Überwachungssignal US erkennt - unter einen Minimalwert, so wird der Ladeschalter 37 geschlossen, so dass der Speicherkondensator 36 über einen Ladestrom geladen wird. Hat die Kondensatorspannung UC ihren Maximalwert erreicht, wird der Ladeschalter 37 geöffnet und der Ladestrom abgeschaltet.

Während des Aufladens des Speicherkondensators 36 kann zur genauen Messung der Kondensatorspannung UC der Ladestrom durch kurzzeitiges Öffnen des Ladeschalters 37 unterbrochen werden. Dies führt dazu, dass an einem parasitären Serienwiderstand des Speicherkondensators 36 keine durch den Ladestrom bewirkte Spannung anliegt. Die über die Messschaltung 38 gemessene Kondensatorspannung UC kann auf diese Weise genauer gemessen werden. Bei einer alternativen Ausführungsform kann während der Aufladung des Speicherkondensators 37 ununterbrochen ein Ladestrom auch während der Bestimmung der Kondensatorspannung UC zugelassen werden. In diesem Fall wird in der Steuereinheit 25 eine Korrekturrechnung durchgeführt. Der parasitäre Serienwiderstand des Speicherkondensators 36 ist bekannt. Anhand des Ladestroms und des parasitären Serienwiderstandes kann der durch die Messschaltung 38 gemessene Spannungswert der Kondensatorspannung UC um die am parasitären Serienwiderstand anliegende Spannung reduziert und damit ein genauerer Wert für die Kondensatorspannung UC rechnerisch ermittelt werden. Auf diese Weise ist eine genauere Steuerung des Ladezustands des Speicherkondensators 36 ermöglicht.

Bei verfügbarer Netzspannung UN wird der dritte Wandler 44 über das dritte Wandlersignal W3 angesteuert. Der dritte Wandler 44 betreibt die Beleuchtungseinheit 45. Durch ein beispielsweise pulsweitenmoduliertes drittes Wandlersignal W3 kann die Helligkeit der Leuchtmittel der Beleuchtungseinheit 45 eingestellt werden.

Ist die Netzspannung UN verfügbar, bleibt der gesteuerte Wandlerschalter 24 des zwischen dem Speicherkondensator 36 und der Notbeleuchtung 43 zwischengeschalteten zweiten Wandlers 42 geöffnet. Der Speicherkondensator 36 wird mithin nicht entladen und die Notbeleuchtung 43 ist ausgeschaltet. Sobald die Netzspannung UN ausfällt, erkennt dies die Steuereinheit 25 anhand des Überwachungssignals VU. Über den ersten Wandler 20 und den dritten Wandler 44 kann daher für die Sekundärseite 11 keine elektrische Energie mehr zur Verfügung gestellt werden. Die Ansteuerung des ersten Wandlers 20 und des dritten Wandlers 44 durch die Steuereinheit 25 wird abgeschaltet. Der Ladeschalter 37 wird über das Ladesignal LS geöffnet. Zur Gewährleistung des Betriebs der Steuereinheit 25 wird die Versorgungsspannung für die Steuereinheit 25 über den Gleichspannungswandler 53 zur Verfügung gestellt. Die Steuereinheit 25 steuert über das zweite Wandlersignal W2 den zweiten Wandler 42 zwischen dem Speicherkondensator 36 und der Notbeleuchtung 43 derart an, dass die Notbeleuchtung 43 mit einer vorgegebenen Helligkeit betrieben wird.

In diesem Notbetriebszustand entlädt sich der Speicherkondensator 36. Die Kondensatorspannung UC sinkt entsprechend der abnehmenden Ladung. Die Steuereinheit 25 ist dazu eingerichtet, das zweite Wandlersignal W2 zur Ansteuerung des zweiten Wandlers 42 angepasst an die sinkende Kondensatorspannung UC während der Entladung des Speicherkondensators 36 anzupassen, so dass für die Notbeleuchtung 43 sowohl eine ausreichende Spannung, als auch ein ausreichender Strom zur Verfügung steht. Es ist dabei möglich, bei Unterschreiten eines Schwellenwertes der Kondensatorspannung UC die ausgangsseitig am zweiten Wandler 42 bereitgestellte Leistung und beispielsgemäß den ausgangsseitig bereitgestellten Strom zu verringern, insbesondere abhängig von Werten der Kondensatorspannung UC stufenweise zu reduzieren. Dadurch kann ein plötzliches Ausschalten der Notbeleuchtung 43 verhindert werden, wenn die Ladung des Speicherkondensators 36 bereits stark gesunken ist. Bei einem Ausführungsbeispiel wird über das Ansteuern des zweiten Wandlers 42 mit Hilfe des zweiten Wandlers W2 außerdem verhindert, dass sich der als Feststoffkondensator ausgeführte Speicherkondensator 36 vollständig entlädt. Eine vollständige Entladung würde auf Dauer zur Beschädigung bzw. Zerstörung des Speicherkondensators 36 führen. Bevor dies eintritt, wird der Betrieb des zweiten Wandlers 42 und mithin der Notbeleuchtung 43 beendet. Wie beschrieben kann dies durch kontinuierliches oder stufenweises Reduzieren der Ausgangsleistung am zweiten Wandler 42 erfolgen, so dass das Abschalten nicht plötzlich, sondern erkennbar über einen vorgebbaren Zeitraum erfolgt.

Sobald die Netzspannung UN wieder zur Verfügung steht, wird die Notbeleuchtung 43 über den zweiten Wandler 42 durch die Steuereinheit 25 abgeschaltet und die Beleuchtungseinheit 45 über den dritten Wandler 44 betrieben. Die Spannungsversorgung für die Steuereinheit 25 wird durch Ansteuerung des ersten Wandlers 22 bereitgestellt. Der Speicherkondensator 36 wird durch Schließen des Ladeschalters 37 aufgeladen, bis die maximale Kondensatorspannung UC erreicht ist. Auch während des Aufladens des Speicherkondensators 36 wird der erste Wandler 20 von der Steuereinheit 25 derart angesteuert, dass die Versorgungsspannung an der Steuereinheit 25 die Führungsgröße darstellt und ein entsprechendes erstes Wandlersignal W1 erzeugt wird. Durch diese Ausgestaltung wird verhindert, dass Lastschwankungen durch Ein- und Ausschalten des Ladestroms für den Speicherkondensator 36 dazu führen, dass die Versorgungsspannung der Steuereinheit 25 für deren Betrieb nicht mehr ausreicht.

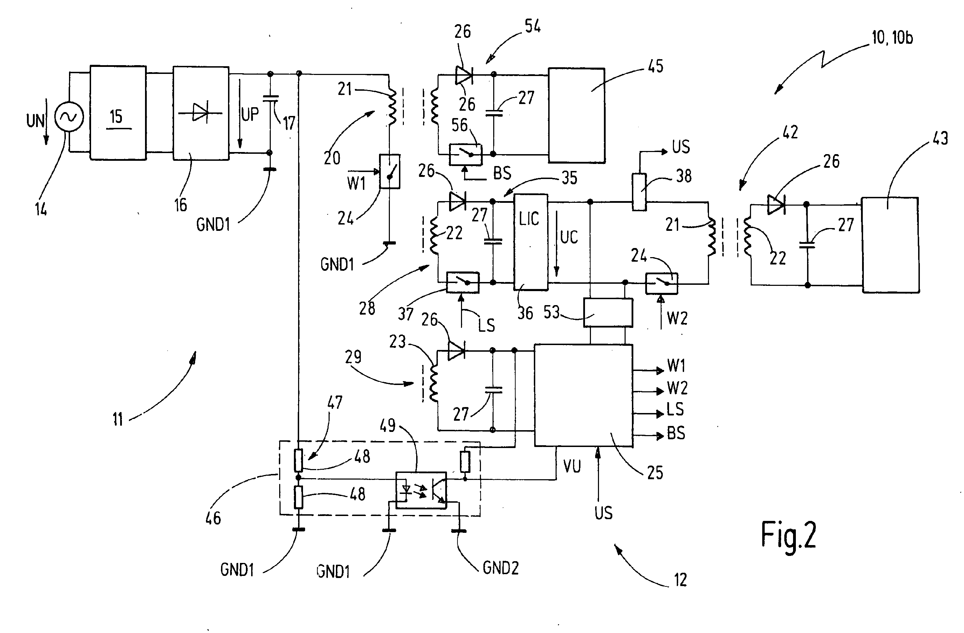

In Figur 2 ist eine zweite Betriebssteuervorrichtung 10b veranschaulicht. Im Folgenden werden lediglich Unterschiede gegenüber der ersten Betriebssteuervorrichtung 10a erläutert. Im Übrigen wird auf die vorstehende Erläuterung zum ersten Ausführungsbeispiel 10a der Betriebssteuervorrichtung 10 verwiesen.

Bei der zweiten Betriebssteuervorrichtung 10b ist anstelle des dritten Wandlers 44 eine dritte Sekundärwicklungsschaltung 54 des ersten Wandlers 20 vorhanden, die bei verfügbarer Netzspannung UN zur Versorgung der Beleuchtungseinheit 45 mit elektrischer Energie dient. Die dritte Sekundärwicklungsschaltung 54 weist eine Reihenschaltung aus einer dritten Sekundärwicklung 55, einer Wandlerdiode 26, einem Wandlerkondensator 27 und einem Steuerschalter 56 auf, der durch ein Betriebssteuersignal BS der Steuereinheit 25 angesteuert wird. Über das Betriebssteuersignal BS kann die Helligkeit der Beleuchtungseinheit 45 im Normalbetrieb bei verfügbarer Netzspannung UN eingestellt werden.

Auch bei dieser Ausführungsform ist es wichtig, dass die Steuereinheit 25 den gesteuerten Wandlerschalter 24 des ersten Wandlers 20 derart ansteuert, dass bei verfügbarer Netzspannung UN stets eine ausreichende Versorgungsspannung für die Steuereinheit 25 zu deren Betrieb zur Verfügung steht. Die Steuerung der Helligkeit der Beleuchtungseinheit 45 kann unabhängig davon über den Steuerschalter 56 der dritten Sekundärwicklungsschaltung 54 erfolgen.

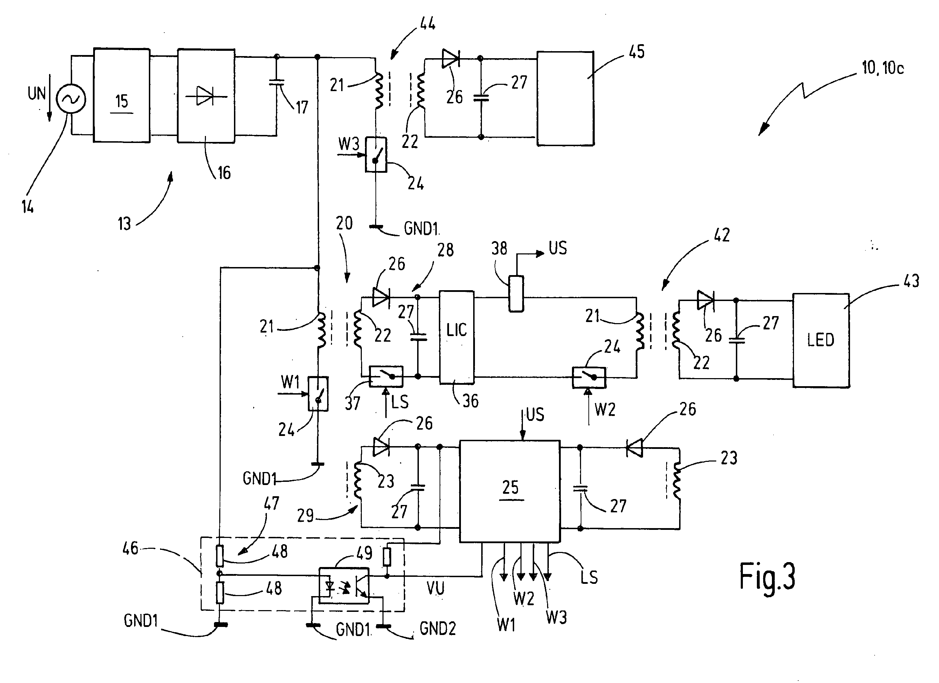

Eine dritte Betriebssteuervorrichtung 10c ist in Figur 3 veranschaulicht. Das dritte Ausführungsbeispiel 10c entspricht im Wesentlichen dem ersten Ausführungsbeispiel 10a der Betriebssteuervorrichtung 10. Der wesentliche Unterschied zwischen den beiden Ausführungsbeispielen besteht darin, dass anstelle des Gleichspannungswandlers 53 der zweite Wandler 42 neben seiner ersten Sekundärwicklung 22 auch eine zweite Sekundärwicklung 23 aufweist. Über die zweite Sekundärwicklung 23 des zweiten Wandlers 42 wird die Steuereinheit 25 mit elektrischer Energie aus dem Speicherkondensator 36 versorgt, wenn keine Netzspannung UN verfügbar ist. Durch eine Reihenschaltung der zweiten Sekundärwicklung 23 mit einer Wandlerdiode 26 und einem Wandlerkondensator 27 ist eine zweite Sekundärwicklungsschaltung gebildet. Die Steuereinheit 25 ist parallel zum Wandlerkondensator 27 geschaltet. Die Steuereinheit 25 wird somit bei verfügbarer Netzspannung UN über den ersten Wandler 20 aus der Primärgleichspannung UP und bei Ausfall der Netzspannung UN aus dem Speicherkondensator 36 über den zweiten Wandler 42 mit elektrischer Energie versorgt. Ansonsten entspricht der Aufbau und die Funktion der dritten Betriebssteuervorrichtung 10c dem ersten Ausführungsbeispiel 10a.

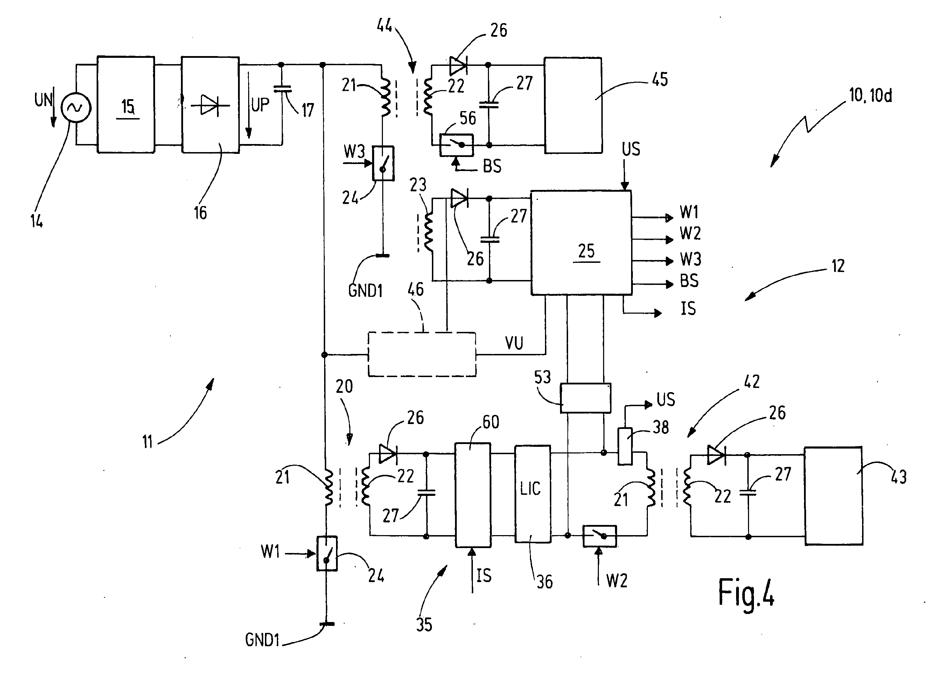

Bei einer vierten Betriebssteuervorrichtung 10d (Figur 4) weist der erste Wandler 20 im Unterschied zu den anderen Ausführungsbeispielen lediglich eine Sekundärwicklung 22 auf. Im Normalbetriebszustand bei verfügbarer Netzspannung UN wird die Steuereinheit 25 über eine zweite Sekundärwicklungsschaltung 29 des dritten Wandlers 44 versorgt. Der dritte Wandler 44 wird über das dritte Wandlersignal W3 derart angesteuert, dass bei verfügbarer Netzspannung stets eine konstante Versorgungsspannung für die Steuereinheit 25 zur Verfügung gestellt wird. Um die Helligkeit der Beleuchtungseinheit 45 unabhängig davon einstellen zu können, ist analog zum zweiten Ausführungsbeispiel 10b ein Steuerschalter 56 in Reihe zur ersten Sekundärwicklung 22 des dritten Wandlers 44 geschaltet. Der Steuerschalter 46 wird über das Betriebssteuersignal BS von der Steuereinheit angesteuert, beispielsweise pulsweiten-moduliert.

Bei der vierten Betriebssteuervorrichtung 10d ist wie bei der zweiten Betriebssteuervorrichtung 10b ein Gleichspannungswandler 53 vorhanden, über den die Steuereinheit 25 bei Ausfall der Netzspannung aus dem Speicherkondensator 36 mit Energie versorgt werden kann.

Um für das Aufladen des Speicherkondensators 36 einen konstanten Ladestrom zur Verfügung stellen zu können, ist zwischen der Sekundärwicklungsschaltung des ersten Wandlers 20 und dem Speicherkondensator 36 eine Stromquelle 60 zwischengeschaltet. Die Stromquelle 60 wird über ein Stromquellensignal IS von der Steuereinheit 25 angesteuert, um den konstanten Ladestrom ein- oder auszuschalten.

Bei der vierten Betriebssteuervorrichtung 10d gemäß Figur 4 kann der Ladestrom für den Speicherkondensator 36 dadurch gestoppt und/oder gestartet werden, dass man auf den Wandlerschalter 24 dahingehend Einfluss nimmt, dass er sozusagen seinen Betrieb einstellt, also in einem Schaltzustand verbleibt. Beispielsweise kann die Steuereinheit 25 über einen Optokoppler auf den ersten Wandler 20 derart Einfluss nehmen, dass er seinen Betrieb einstellt. Beispielsgemäß kann dafür das Wandlersignal W1 ausgeschaltet werden. Ist der Wandlerschalter 24 in einem integrierten Schaltkreis untergebracht, kann auf diesen durch ein Feedback-Signal, durch ein ON/OFF-Signal oder durch die Versorgungsspannung Einfluss genommen werden.

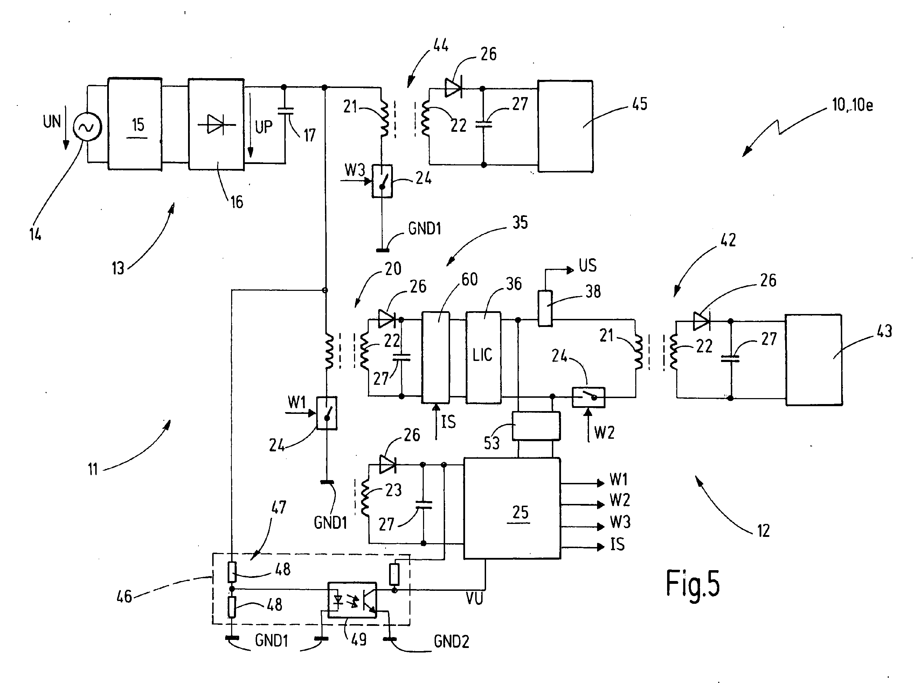

Das in Figur 5 veranschaulichte fünfte Ausführungsbeispiel 10e der Betriebssteuervorrichtung 10 entspricht im Wesentlichen dem vierten Ausführungsbeispiel 10d mit dem Unterschied, dass die Energieversorgung der Steuereinheit 25 im Normalbetrieb bei verfügbarer Netzspannung UN über die Sekundärwicklungsschaltung 29 des ersten Wandlers 20 erfolgt, analog zum ersten Ausführungsbeispiel gemäß Figur 1.

Grundsätzlich sind verschiedenen Kombinationen der Merkmale aus den beschriebenen Ausführungsbeispielen miteinander kombinierbar. Die Anzahl der Wandler, insbesondere der eingesetzten Sperrwandler kann variieren. So könnte beispielsweise auch zur Versorgung der Beleuchtungseinheit 45 für die Ladeschaltung 35 sowie für die Steuereinheit 25 jeweils ein separater Sperrwandler über die Primärgleichspannung UP elektrische Energie bereitstellen. Abgesehen von den vorstehend dargestellten Unterschieden zwischen den einzelnen Ausführungsformen 10a bis 10e der Betriebssteuervorrichtung 10 ist die Funktion und der Aufbau identisch, so dass insofern auf die ausführliche Erläuterung zu Figur 1 verwiesen werden kann.

Die Erfindung betrifft eine Betriebssteuervorrichtung 10 für eine Beleuchtungsanordnung 43, 45, die eine Notbeleuchtung 43 aufweist. Die Betriebssteuervorrichtung weist einen Speicherkondensator 36 zur Versorgung der Notbeleuchtung 43 auf, wenn eine im Normalbetrieb verfügbare Netzspannung UN ausfällt. Über eine Ladeschaltung 35 wird der Speicherkondensator 36 bei verfügbarer Netzspannung UN geladen. Die Ladeschaltung 35 weist einen ersten Wandler 20 mit galvanischer Trennung auf, der vorzugsweise als Sperrwandler ausgeführt ist. Die Ladeschaltung 35 wird von einer Steuereinheit 25 angesteuert. Die Steuereinheit 25 bestimmt den Ladezustand des Speicherkondensators 36 und steuert abhängig davon die Ladeschaltung 35 an. Zwischen dem Speicherkondensator 36 und der Notbeleuchtung 43 ist ein zweiter Wandler 42, vorzugsweise ein Sperrwandler, angeordnet. Unabhängig von der am Speicherkondensator 36 verfügbaren Kondensatorspannung UC kann die erforderliche elektrische Leistung über den zweiten Wandler 42 an der Notbeleuchtung 43 bereitgestellt werden.

### Bezugszeichenliste:

- 10: Betriebssteuervorrichtung
- 10a: erste Betriebssteuervorrichtung
- 10b: zweite Betriebssteuervorrichtung
- 10c: dritte Betriebssteuervorrichtung
- 10d: vierte Betriebssteuervorrichtung
- 10e: fünfte Betriebssteuervorrichtung
- 11: Primärseite
- 12: Sekundärseite
- 13: Gleichrichterschaltung
- 14: Netzspannungsquelle
- 15: Filter
- 16: Diodenschaltung
- 17: Glättungskondensator

- 20: erster Wandler
- 21: Primärwicklung
- 22: erste Sekundärwicklung
- 23: zweite Sekundärwicklung
- 24: Wandlerschalter
- 25: Steuereinheit
- 26: Wandlerdiode
- 27: Wandlerkondensator
- 28: erste Sekundärwicklungsschaltung
- 29: zweite Sekundärwicklungsschaltung

- 35: Ladeschaltung
- 36: Speicherkondensator
- 37: Ladeschalter
- 38: Messschaltung

- 42: zweiter Wandler
- 43: Notbeleuchtung
- 44: dritter Wandler
- 45: Beleuchtungseinheit
- 46: Spannungsüberwachungsschaltung
- 47: Spannungsteiler
- 48: Ohmscher Widerstand
- 49: Optokoppler

- 53: Gleichspannungswandler
- 54: dritte Sekundärwicklungsschaltung
- 55: dritte Sekundärwicklung
- 56: Steuerschalter

- 60: Stromquelle

- BS: Betriebssteuersignal
- GND1: Masse der Primärseite
- GND2: Masse der Sekundärseite
- IS: Stromquellensteuersignal
- LS: Ladesignal
- UN: Netzspannung
- UP: Primärgleichspannung
- US: Spannungssignal
- VU: Überwachungssignal
- W1: erstes Wandlersignal
- W2: zweites Wandlersignal
- W3: drittes Wandlersignal

## Patentansprüche

1. Betriebssteuervorrichtung (10) für eine Beleuchtungsanordnung (43, 45) mit einer Beleuchtungseinheit (45) und einer Notbeleuchtung (43),
mit einem Speicherkondensator (36) zur Versorgung der Notbeleuchtung (43) mit elektrischer Energie,
mit einer Ladeschaltung (35), die über einen ersten Wandler (20) mit galvanischer Trennung an die Netzspannung (UN) angeschlossen ist und zum Aufladen des Speicherkondensators (36) mit dem Speicherkondensator (36) verbindbar ist,
mit einer Steuereinheit (25), die dazu eingerichtet ist, die Ladeschaltung (35) abhängig vom Ladezustand des Speicherkondensators (36) anzusteuern,
und mit einem zweiten Wandler (42) zwischen dem Speicherkondensator (36) und der Notbeleuchtung (43).

2. Betriebssteuervorrichtung nach Anspruch 1,
**dadurch gekennzeichnet, dass** der erste Wandler (20) und/oder der zweite Wandler (42) als Sperrwandler ausgeführt ist.

3. Betriebssteuervorrichtung nach Anspruch 1 oder 2,
**dadurch gekennzeichnet, dass** diese mit einer Spannungsüberwachungsschaltung (46) zur Überwachung der Netzspannung (UN) ausgestattet ist.

4. Betriebssteuervorrichtung nach einem der vorhergehenden Ansprüche,
**dadurch gekennzeichnet, dass** die Steuereinheit (25) dazu eingerichtet ist, die Beleuchtungseinheit (43) bei verfügbarer Netzspannung (UN) und die Notbeleuchtung (43) bei fehlender Netzspannung (UN) zu steuern.

5. Betriebssteuervorrichtung nach einem der vorhergehenden Ansprüche,
**dadurch gekennzeichnet, dass** die Steuereinheit (25) galvanisch von der Netzspannung (UN) getrennt ist.

6. Betriebssteuervorrichtung nach einem der vorhergehenden Ansprüche,
**dadurch gekennzeichnet, dass** die Steuereinheit (25) zur Versorgung der mit elektrischer Energie an den ersten Wandler (20) der Ladeschaltung (35) angeschlossen ist.

7. Betriebssteuervorrichtung nach Anspruch 6,
**dadurch gekennzeichnet, dass** die Steuereinheit (25) dazu eingerichtet ist, den ersten Wandler (20) derart zu steuern, dass an einer Sekundärwicklungsschaltung (29) des ersten Wandlers (20) eine konstante Versorgungsspannung für die Steuereinheit (25) zur Verfügung steht.

8. Betriebssteuervorrichtung nach einem der vorhergehenden Ansprüche,
**dadurch gekennzeichnet, dass** die Ladeschaltung (35) zum Aufladen des Speicherkondensators (36) einen konstanten Ladestrom bereitstellt.

9. Betriebssteuervorrichtung nach einem der vorhergehenden Ansprüche,
**dadurch gekennzeichnet, dass** zwischen dem Speicherkondensator (36) und der Notbeleuchtung (43) eine galvanische Trennung vorhanden ist.

10. Betriebssteuervorrichtung nach einem der vorhergehenden Ansprüche,
**dadurch gekennzeichnet, dass** die Steuereinheit (25) über den zweiten Wandler (42) mit dem Speicherkondensator (36) verbunden ist.

11. Betriebssteuervorrichtung nach einem der vorhergehenden Ansprüche,
**dadurch gekennzeichnet, dass** die Steuereinheit (25) über einen Gleichspannungswandler (53) mit dem Speicherkondensator (36) verbunden ist.

12. Betriebssteuervorrichtung nach einem der vorhergehenden Ansprüche,
**dadurch gekennzeichnet, dass** die Steuereinheit (25) die Ladeschaltung (35) abhängig von einer gemessenen Spannung (UC) am Speicherkondensator (36) ansteuert.

13. Betriebssteuervorrichtung nach einem der vorhergehenden Ansprüche,
**dadurch gekennzeichnet, dass** die Steuereinheit (25) den Ladestrom in den Speicherkondensator (36) während der Spannungsmessung unterbricht.

14. Betriebssteuervorrichtung nach einem der vorhergehenden Ansprüche,
**dadurch gekennzeichnet, dass** die Steuereinheit (25) während des Ladens des Speicherkondensators (36) mit einem Ladestrom eine Spannungsmessung der Spannung am Speicherkondensator (36) durchführt und aus dem Spannungsmesswert einen korrigierten Wert der Spannung am Speicherkondensators (36) abhängig von dem parasitären Serienwiderstand des Speicherkondensators (36) berechnet.

15. Verfahren zum Betreiben einer Betriebssteuervorrichtung (10) nach einem der vorhergehenden Ansprüche mit folgenden Schritten:
- Prüfung der Verfügbarkeit der Netzspannung (UN),
- Bestimmung der Spannung (UC) am Speicherkondensator (36),
- Betreiben der Beleuchtungseinheit (45) bei verfügbarer Netzspannung (UN),
- Einschalten eines Ladestroms für den Speicherkondensator (36) bei verfügbarer Netzspannung (UN), wenn die Spannung (UC) am Speicherkondensator (36) einen Minimalwert unterschreitet,
- Betreiben der Notbeleuchtung (43) bei Ausfall der Netzspannung (UN) durch Ansteuern des zweiten Wandlers (42) zwischen dem Speicherkondensator (36) und der Notbeleuchtung (43).
